# EUROPEAN PATENT SPECIFICATION

(11) **EP 1 066 906 B1**
(45) Date of publication and mention of the grant of the patent: **28.09.2005**
(21) Application number: 00114563.0
(22) Date of filing: 06.07.2000
(51) Int. Cl.: B23D 59/00, B23D 45/10

(54) **Method of measuring the characteristics of circular saws and for accurately aligning a circular saw and associated notching tool**
Verfahren zur Messung von mit Kreissägeblättern verbundenen Charakteristiken und zur genauen Ausrichtung von Kreissägeblatt und Vorritzwerkzeug
Procédé pour mesurer des caractertéristiques liées à des lames de scies circulaires et pour l' alignement précise de lame de scie circulaire et la lame de scie à inciser

(30) Priority: 07.07.1999 IT BO990375
(43) Date of publication of application: 10.01.2001
(73) Proprietor: BIESSE S.p.A., 61100 Pesaro (IT)
(72) Inventor: Naldi, Valter, 40100 Bologna (IT)
(74) Representative: Eccetto, Mauro

(56) References cited:
- DE-A- 19 520 108
- DE-U- 29 716 247

## Description

The present invention relates to a method for measuring the characteristics of circular saws and for accurately aligning a circular saw and the associated notching tool, both used on a panel cutting machine.

Wood panels or similar are normally cut on machines comprising a frame approximately the same size as, but no smaller than, the panels for cutting; a straight guide integral with one edge of the frame and extending in a given horizontal direction; a carriage running along the guide; and a cutting unit mounted on the carriage to cut the panels parallel to said horizontal direction.

The cutting unit normally comprises a circular saw, which projects from a longitudinal gap formed in a horizontal bed integral with the frame on which a pack of panels is placed, so as to cut the pack in a vertical plane parallel to the horizontal traveling direction of the carriage. The pack is clamped, during the cutting operation, by pressure members; and the circular saw is powered by a drive unit, which, to reduce width, is supported on the carriage, beneath the saw, and is connected to the saw by a speed reducer, e.g. a belt reducer.

Cutting machines of the above type normally comprise a notching tool - also in the form of a circular saw, but much smaller in diameter than the one used to cut the pack of panels - which, as the carriage moves towards the pack of panels, precedes the circular saw to cut a groove in the underside surface of the pack. This is particularly desirable in the case of veneered chipboard panels, to enable the circular saw to work its way out of the pack without chipping the edges of the cut made by the saw. That is, any panels on the top or within the pack are gripped firmly between the pressure member and the work table, so that the topside surface of each panel effectively supports the underside surface of the panel on top, thus ensuring a clean cut. The underside surface of the bottom panel in the pack, however, lies directly on the work table, astride the cutting gap in the table, and is therefore particularly susceptible to chipping by the saw as this works its way out of the pack.

As a result, the bottom panel is invariably cut poorly, especially, as stated, in the case of veneered chipboard. To ensure perfect cutting of both the outer surfaces of all the panels in the pack, most cutting machines are therefore equipped with notching tools for cutting a groove and so preventing chipping of the edges of the cut made in the underside surface of the bottom panel in the pack. The notching tool rotates in the opposite direction to the circular saw, and normally cuts the bottom panel to a depth of a couple of millimeters. Problems are encountered, however, in aligning the circular saw with the notching tool. That is, to achieve the desired effect, the cut made by the circular saw must be located within and perfectly centered with respect to the groove made by the notching tool on the underside surface of the pack. For example, the groove made by the notching tool must be 0.05 mm wider on both sides with respect to the cut made by the circular saw, but not much wider than the saw blade, to avoid forming a step on the underside surface of the panel, which would ultimately lead to problems at the panel finishing (e.g. edging) stage.

Alignment is normally done manually by the operator making a number of test cuts, and is therefore considerably time-consuming, considering that, on this type of machine, the circular saw is changed every 2-3 hours, and manually aligning the saw with the notching tool normally takes 15-20 minutes.

Document DE-19520108-A1 discloses a cutting machine comprising a setting system for positioning the notching tool relative to the circular saw in directions parallel and perpendicular to the latter.

The setting system comprises a processor for determining the penetration depth of the notching tool in dependence on the width of the circular saw and on the cross-sectional dimensions of the notching tool teeth, and LED or laser sensors for determining the position of both the circular saw and the notching tool relative to a parallel reference plane.

Each time a new circular saw is mounted on the cutting machine, the processor and the sensors determine the position of the circular saw and of the notching tool relative to the reference plane and then the processor controls a positioning drive which moves the notching tool horizontally with respect to the circular saw so that a groove formed in the underside surface of the bottom panel by the notching tool is centered perfectly by a cut made by the circular saw.

It is therefore an object of the present invention to provide a method for measuring the characteristics of circular saws and for accurately aligning a circular saw and the associated notching tool designed to eliminate the aforementioned drawbacks.

According to the present invention, there is provided a method as claimed in Claim 1.

A non-limiting embodiment of the present invention will be described by way of example with reference to the accompanying drawings, in which:
Figure 1 shows a panel cutting machine comprising a device in accordance with the present invention;
Figure 2 shows a larger-scale section, with parts removed for clarity, of a detail of the Figure 1 machine;
Figure 3a shows a larger-scale plan view of part of the Figure 1 machine;
Figure 3b shows a larger-scale view of a Figure 3a notching tool and relative actuating devices;
Figure 4a shows a larger-scale view of a notching tool with a substantially trapezoidal cross section;
Figure 4b shows a larger-scale view and respective geometric parameters of a circular saw and respective notching tool;
Figure 5a shows a pack of panels and an enlarged view of a cut made by a circular saw and aligned correctly with respect to a groove made by a notching tool;
Figure 5b shows a plan view of the Figure 5a cut and groove;
Figure 6a shows a pack of panels and an enlarged view of a cut made by a circular saw and misaligned with respect to a groove made by a notching tool;
Figure 6b shows a plan view of the Figure 6a cut and groove.

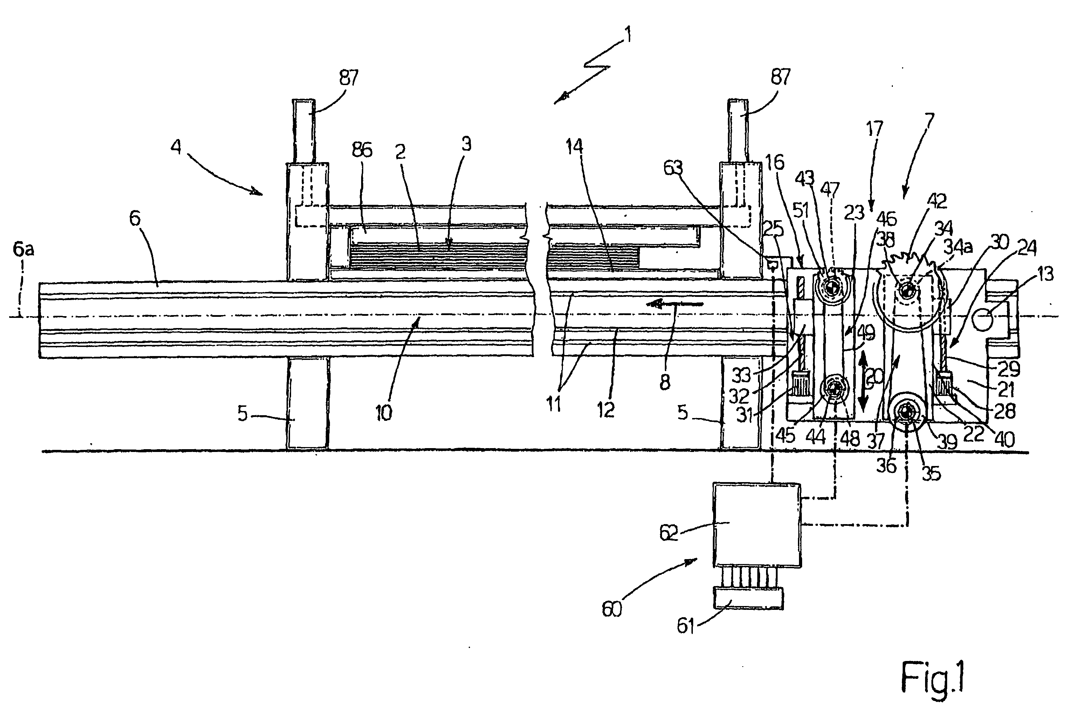

Number 1 in Figure 1 indicates as a whole a cutting machine for cutting panels 2 - preferably, but not necessarily, wood panels, even of considerable size and weight - stacked neatly to form thick packs 3.

Machine 1 comprises a frame 4, in turn, comprising two vertical supporting posts 5, and a work supporting beam 6 integral with posts 5 and having a substantially horizontal axis 6a. Machine 1 also comprises a tool carriage 7 mounted to run along beam 6 in a direction 8 parallel to axis 6a of beam 6. More specifically, beam 6 is fitted laterally with a guide device 10 for guiding carriage 7 and defined by two longitudinal guides 11 integral with beam 6 and both extending parallel to axis 6a along the full length of beam 6. Guide device 10 also comprises a rack 12, which is integral with beam 6, is located between and extends parallel to guides 11, and cooperates with an actuating device 13 carried by and for powering carriage 7.

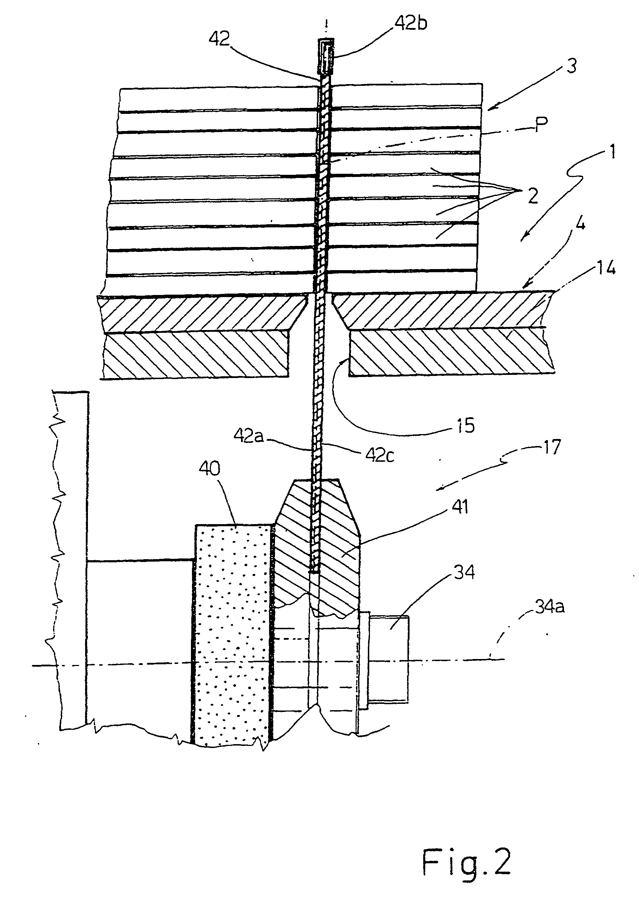

With reference to Figures 1 and 2, frame 4 also comprises a horizontal work table 14 onto which panels 2 are loaded. Table 14 is fixed to the top of beam 6, between vertical posts 5, and has a longitudinal gap 15 (Figure 2) extending the full length of table 14, parallel to axis 6a, and defining the cutting plane of panels 2. Actuating device 13 moves carriage 7 along beam 6 to and from a rest position - to the right in Figure 1 - in which carriage 7 is located at an end portion of beam 6 to enable panels 2 to be loaded and unloaded on and off work table 14, and to enable, when necessary, manual or automatic replacement of the tools on carriage 7.

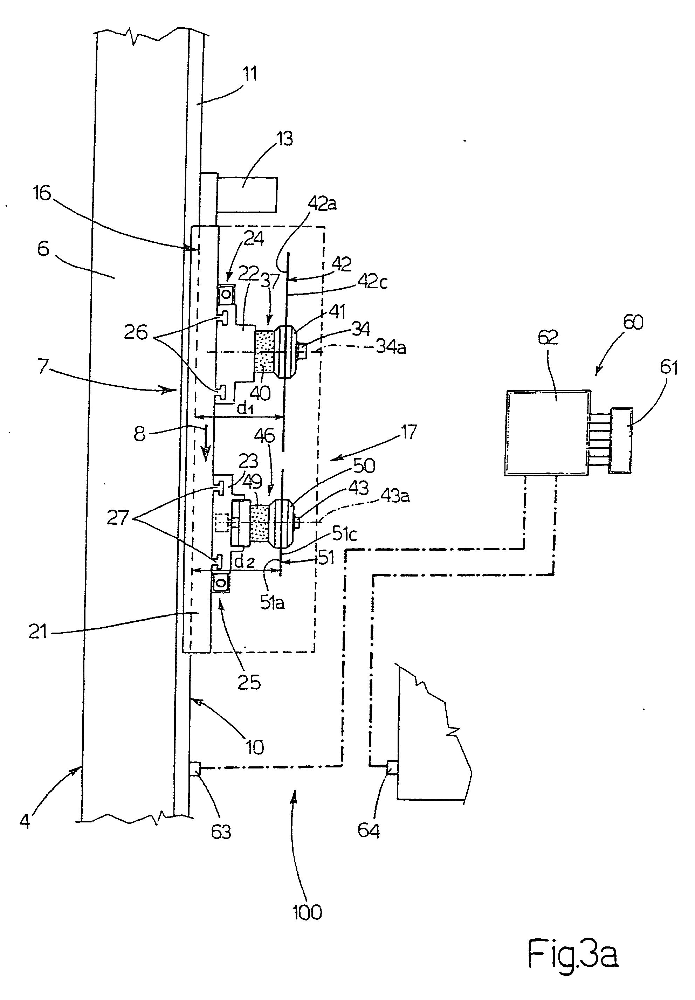

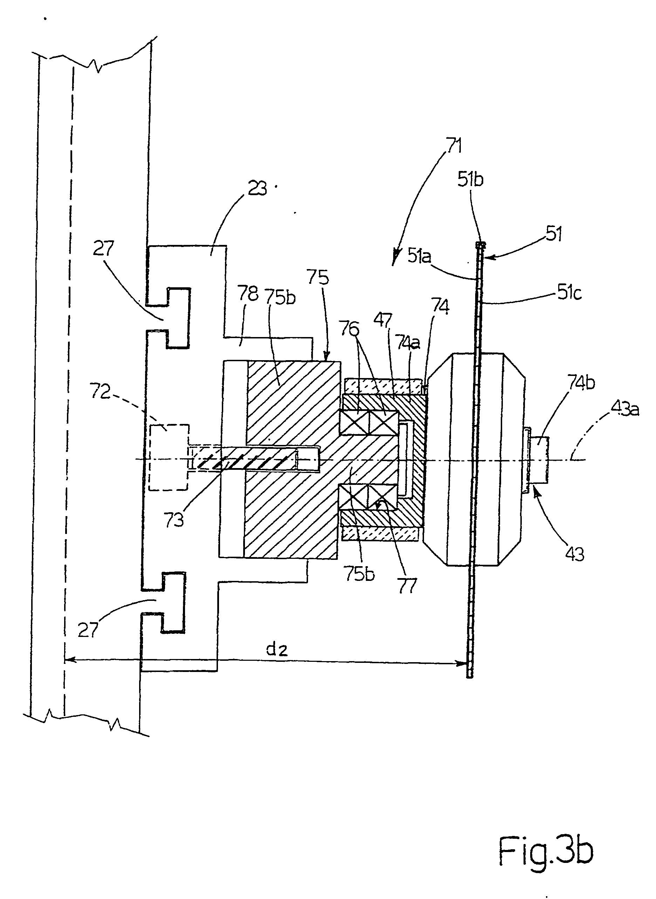

With reference to Figure 1, tool carriage 7 comprises a box-type supporting frame 16, which is mounted to slide along guides 11 and is fitted integrally with actuating device 13 of carriage 7; and a cutting unit 17 carried by box frame 16 and in turn comprising a vertical plate 21 supporting two slides 22 and 23 moved in a vertical direction 20 by respective actuating devices 24 and 25. More specifically, for each slide 22, 23, plate 21 comprises a respective pair of dovetail guides 26, 27 (figures 3a, 3b) for supporting and guiding respective slide 22, 23 in direction 20. Device 24 comprises an electric motor 28 fitted to plate 21; a worm 29 extending in direction 20 and fitted to the drive shaft of motor 28; and an internally threaded vertical sleeve 30 integral with and projecting from slide 22, and engaged internally by worm 29. Via the worm 29-sleeve 30 coupling, rotation of the drive shaft of motor 28 moves slide 22 in direction 20. Similarly, device 25 comprises an electric motor 31 fitted to plate 21; a worm 32 extending in direction 20 and fitted to the drive shaft of motor 31; and an internally threaded vertical sleeve 33 integral with and projecting from slide 23, and engaged internally by worm 32.

Slide 22 is fitted with two projecting shafts 34 and 35 with respective horizontal axes perpendicular to direction 8. Shaft 35 is the drive shaft of an electric motor 36 fitted to slide 22, is lower than shaft 34, and transmits power to shaft 34 via a transmission device 37 defined by a pulley 38 fitted to shaft 34, a pulley 39 fitted to shaft 35, and a transmission belt 40 fitted between pulleys 38 and 39. Shaft 34 is fitted with a spindle 41 in turn fitted with a rotary tool 42 defined by a circular saw for cutting panels 2 in a plane perpendicular to the axis 34a of rotation of shaft 34.

Slide 23 is fitted with two projecting shafts 43 and 44 with respective horizontal axes perpendicular to direction 8. Shaft 44 is the drive shaft of an electric motor 45 fitted to slide 23, is lower than shaft 43, and transmits power to shaft 43 via a transmission device 46 defined by a pulley 47 fitted to shaft 43, a pulley 48 fitted to shaft 44, and a transmission belt 49 fitted between pulleys 47 and 48. Shaft 43 is fitted with a spindle 50 in turn fitted with a rotary tool 51 defined by a circular saw or so-called notching tool for notching panels 2, before they are cut by saw 42, in a plane perpendicular to the axis 43a of rotation of shaft 43. Notching tool 51 is rotated by motor 45 in the opposite direction to saw 42. In the Figure 1 embodiment, saw 42 rotates anticlockwise, and notching tool 51 clockwise.

Slides 22 and 23 are therefore movable in direction 20, so that respective predetermined portions of saw 42 and notching tool 51 project from work table 14 and run along gap 15 to cut panels 2, and so that the portion of circular saw 42 projecting from work table 14 can be adjusted according to the height of pack 3 of panels 2 on work table 14, and the portion of notching tool 51 projecting from table 14 can be adjusted according to the required notching depth.

Machine 1 also comprises a control unit 60, which has an operator control panel 61 for entering the operating parameters of machine 1, and controls actuating device 13 of carriage 7, actuating devices 24, 25 of slides 22, 23, and motors 36, 45 via an electronic central control unit 62.

With reference to Figures 1 and 3a, machine 1 also comprises a device 100, in accordance with the present invention, for accurately aligning any circular saw 42 and associated notching tool 51. As shown in more detail in Figure 3a, device 100 according to the present invention comprises at least one detecting device 63 fitted to frame 4 of machine 1 and facing a lateral surface 42a of saw 42 and a lateral surface 51a of notching tool 51. Detecting device 63 provides for determining the distance between itself and lateral surface 42a of saw 42, and between itself and lateral surface 51a of notching tool 51, and supplies control unit 60 with a signal proportional to the distance detected. Detecting device 63 is preferably, but not necessarily, a position sensor, which directs a laser beam onto lateral surface 42a of saw 42 to determine the distance d1 - as saw 42 travels past device 63 - between device 63 and each tooth 42b on saw 42. Similarly, the same detecting device 63 determines the distance d2 (Figure 3a) between itself and each tooth 51b on notching tool 51, as tool 51 travels past device 63. In other words, device 63, by determining the distance between itself and lateral surface 42a of saw 42, and the distance between itself and each tooth 42b on saw 42, calculates by how much the side of each tooth 42b deviates from lateral surface 42a of saw 42, and likewise for the teeth 51b on notching tool 51.

Laser device 63 may, of course, be replaced by a LED or ultrasonic device, by a videocamera, or by a tracer device; and distance d1 (particularly in the case of large-diameter saws) may obviously differ from one tooth 42b to another on the same saw 42. This is due to incorrect tensioning of saw 42 resulting in deformation of the main body of saw 42, or to other factors intrinsic to the complex construction of saws in general; and each tooth 42b may deviate, with respect to a nominal reference plane, either away from or towards device 63. The same check may also be made of each tooth 51b on notching tool 51, to determine the actual distance d2 between the tooth and device 63; and the d1 and d2 values of each tooth 42b and 51b respectively are sent to control unit 60, which processes this as well as the other data mentioned previously.

In addition to device 63, device 100 may also comprise a similar device 64 also integral with frame 4 of machine 1, located on the opposite side of saw 42 and notching tool 51 with respect to device 63, and for determining the same parameters as device 63, but relative, obviously, to the lateral surfaces 42c, 51c opposite surfaces 42a, 51a. Processing the parameters determined by devices 63 and 64 obviously provides for determining a further parameter, i.e. the thickness, of each tooth 42b, 51b. With regard to notching tool 51, processing the data of devices 63 and 64 obviously also provides for determining, not only the thickness of tooth 51b but also any taper or other parameters indicated later on.

As explained in more detail later on, detecting the deviation of each tooth 42b, and possibly of each tooth 51b, provides for determining corresponding movements of notching tool 51 along axis 43a and, possibly, in vertical direction 20.

With reference to Figures 3a and 3b, slide 23 supports a device 71 for moving notching tool 51 parallel to itself along axis 43a. Device 71 is controlled by central control unit 62, and comprises an electric motor 72, the drive shaft of which is fitted with an externally threaded shaft 73 of axis 43a; electric motor 72 is supported by slide 23 and located between slide 23 and plate 21; shaft 43 is defined by two axially-connected, angularly-disconnected portions 74 and 75; portion 74 comprises a first portion 74a on which pulley 47 is formed, and a second portion 74b supporting spindle 50; portion 75 comprises an externally splined, internally threaded first sleeve portion 75a engaged by shaft 73, and a second portion 75b extending, via the interposition of ball bearings 76, inside a dead hole 77 formed in first portion 74a of portion 74; slide 23 supports an internally splined sleeve 78 engaged by first portion 75a of portion 75; and, since portion 75 is prevented from rotating by the splined coupling of sleeve 78 and portion 75a, rotation of shaft 73 moves shaft 43 along axis 43a.

In an alternative solution to the one shown, motor 72 may be replaced by a knob for manually adjusting the position of notching tool 51 along axis 43a; and a similar knob may obviously also be used in place of motor 31 to move notching tool 51 manually in direction 20.

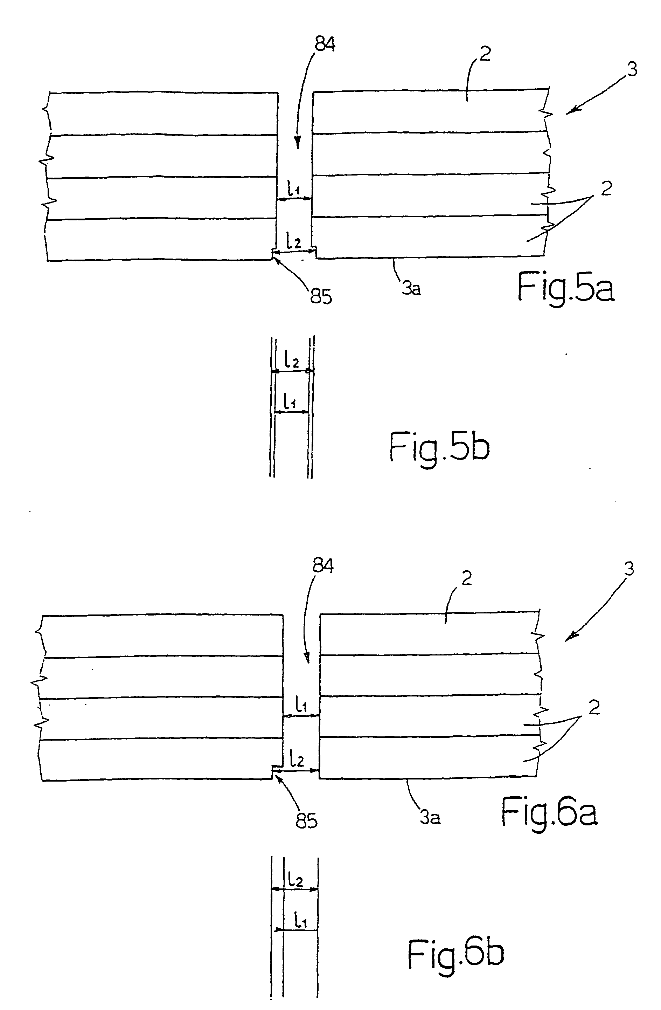

In actual use, once the maximum and minimum deviations of teeth 42b of saw 42 are determined, control unit 60 can calculate the actual width 11 (Figures 5a and 5b) of the cut 84 that will be made by saw 42, and therefore also how far notching tool 51 must be moved along axis 43a to obtain a groove 85 of width 12, and with respect to which cut 84 is centered perfectly.

Figures 6a and 6b show the situation in which cut 84 made by saw 42 is off-centered with respect to groove 85. This is an anomalous configuration, also in view of the fact that, in extreme situations, i.e. with notching tool 51 misaligned with respect to saw 42, cut 84 may even be outside groove 85 altogether, so that the saw comes out directly through the underside surface 3a of pack 3, with all the obvious negative consequences described previously as regards chipping of the edges of cut 84.

All the above considerations presuppose a predetermined thickness of teeth 42b and 51b, so that one alignment - in particular, of notching tool 51 along axis 43a - is sufficient to center the two tools. Since, however, in some cases, it may prove difficult to maintain the relationship between saw 42 and the same notching tool 51 - especially after repeated sharpening of saw 42 - it is preferable to use a notching tool 51 with trapezoidal teeth and, as stated, move notching tool 51 in direction 20 to adjust and adapt the width of groove 85 to the width of cut 84 - obviously altered when saw 42 is sharpened - so that the same notching tool 51 can even be used with saws 42 with teeth 42b of different thicknesses.

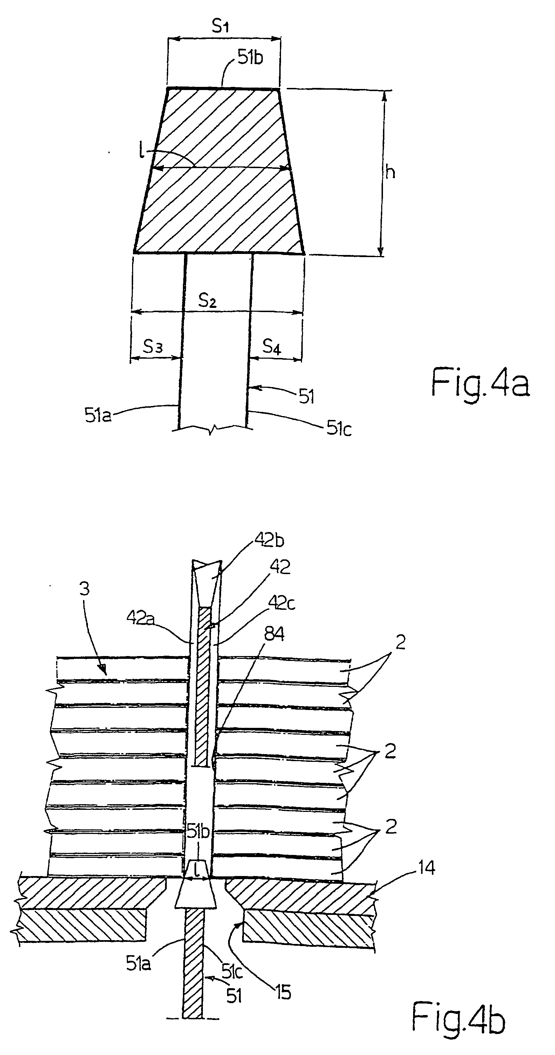

As stated, when using a trapezoidal-section notching tool 51 as shown in Figures 4a and 4b, to align the notching tool 51 with a number of saws 42 of widely differing thicknesses, notching tool 51 must also be moved vertically with respect to plate 21 (Figure 1) by means of device 25.

As shown in Figures 4a and 4b, by raising or lowering notching tool 51, it is possible to adjust the width 1 of groove 85 by exploiting the trapezoidal shape of the tooth 51b section. In the example shown, the minimum and maximum widths l of groove 85 obviously equal the minimum and maximum widths S1 and S2 respectively of the tooth 51b section. In other words, it is possible either to move groove 85 on the underside surface 3a of pack 3, or increase or reduce the width 1 of groove 85, as a function of the minimum and maximum deviations of teeth 42b of saw 42. Such deviations are extremely small and must obviously be compatible with the width of gap 15.

Now, if S is the thickness of teeth 42b, A is the deviation of tooth 42b from surface 42a of saw 42, and I is the thickness of tooth 51b of notching tool 51 to be calculated, a series of parameters of teeth 42b can be detected and a series of commands performed to determine the alignment of notching tool 51 and the width of groove 85. That is, assuming A = 2 mm and S = 4.4 mm are the reference parameters of a precision saw 42, and that all the teeth on saw 42 show A = 2.1 mm and S = 4.4 mm, to obtain a groove 85 wider by 0.1 mm than cut 84, with the extra width divided into 0,05 mm on either side of the center line of cut 84, notching tool 51 must be moved 0.1 mm (the difference between 2.1 and 2 mm) away from frame 4 along axis 43a, and moved in direction 20 so that the thickness I of the part of tooth 51b determining groove 85 equals 4.5 mm. In the event teeth 42b all show A = 1.9 mm and S = 4.4 mm, notching tool 51 must be moved 0.1 mm (the difference between 1.9 and 2 mm) towards frame 4, and moved in direction 20 so that I equals 4.5 mm. Finally, in the event A differs from one tooth to another, e.g. ranges between 2.05 and 2.15 mm, and S of all of teeth 42b equals 4.4 mm, thus actually resulting in a cut 84 of 4.5 mm width, notching tool 51 must be moved 0.05 mm (the difference between 2.05 and 2 mm) away from frame 4, and moved in direction 20 so that I equals 4.6 mm.

The above cases only take into account the deviation of tooth 42b with respect to surface 42a. If the deviation of tooth 42b with respect to surface 42c, however, is also taken into account, the width of cut 84, and hence the alignment of notching tool 51 along axis 43a and in direction 20, may obviously be determined more accurately to determine the correct width of groove 85 and center the groove with respect to cut 84.

Depending on the precision required, measurements may obviously be made of either all or only a limited number of teeth 42b of saw 42.

It should be pointed out that, before measuring and/or processing the above parameters, a series of measurements and tests must be carried out on a specimen saw 42 and specimen notching tool 51 to obtain reference parameter values for the tools actually used on the machine. That is, after determining the parameters of the specimen tools, the specimen notching tool is aligned manually with the specimen saw, and the position assumed by the specimen notching tool is taken as a reference value.

In lieu of a specimen saw 42, the distance between surfaces 42a and 51a (42c and 51c) may be determined automatically by means of device 63 (64) or other means, and the tools aligned by processing the above measurements, as opposed to using specimen tools.

If device 100 is separate from the rest of machine 1, so that machine 1 can operate in masked time in the meantime, machine 1 may be loaded later with an electronic file containing the parameters of a set of saws 42 related to a given notching tool 51, to enable machine 1 - obviously equipped with a similar device 100 for simply aligning notching tool 51 - to align notching tool 51 accurately according to the instructions in the electronic file.

As stated, besides checking teeth 42b of saw 42, device 100 may also be used to check teeth 51b of notching tool 51, to determine, for example, whether teeth 51b all have the same geometric characteristics, such as (Figure 4a): the width S1 of the top of tooth 51b; the width S2 of the base of tooth 51b; the deviations S3 and S4 of the apexes of tooth 51b from reference surfaces 51a and 51c of notching tool 51; the height h and taper of tooth 51b; and the thickness 1 of tooth 51b, even the point-to-point thickness from the base to the top of the tooth. All these parameters may be determined directly or by data processing. Whichever the case, the possibility of moving notching tool 51 in direction 20 provides for making various measurements of the same tooth 51b. All the above considerations relative to notching tool 51 obviously also apply to saw 42.

If device 100 is fitted to machine 1 in the accompanying drawings, the temporary rest position of carriage 7 (Figure 1) may be used to check saw 42 and/or notching tool 51 and align notching tool 51 in real time with respective saw 42, taking into account any structural variations occurring during use of saw 42 and/or notching tool 51. Device 100 is particularly suitable for use on cutting machines 1 equipped with systems for automatically changing saws 42 and/or notching tools 51. In which case, in fact, device 100 on machine 1 immediately recognizes the new saw 42 and/or new notching tool 51, and immediately resets the horizontal, and possibly also the vertical, position of notching tool 51.

Cutting machine 1 is operated in the normal way as regards the cutting operation, which will now be described as of the operating condition in which a pack 3 is located on work table 14 in the cutting position, and carriage 7 is set to the rest position with tools 42 and 51 rotating and ready to cut and notch pack 3 respectively. In the cutting position, pack 3 is maintained integral with frame 4 by a pressure device 86 (Figure 1) extending parallel to axis 6a, and which exerts vertical pressure on pack 3 by virtue of two linear actuators 87 fixed to posts 5. When actuating device 13 is operated, carriage 7 is fed in direction 8 at the traveling speed set by the operator to feed saw 42 and notching tool 51 along gap 15 and into contact with pack 3 to cut panels 2. Actuating device 13 feeds carriage 7 up to an end-of-work position in which pack 3 is cut through completely by saw 42; at which point, device 13 returns carriage 7 to the rest position, after first lowering cutting unit 17 beneath work table 14 in known manner.

The notching tool may obviously have trapezoidal or rectangular teeth. In the case of trapezoidal teeth, a further parameter for processing is the distance between the top of tooth 51b and the axis 43a of rotation of the tool.

## Claims

1. A method for measuring the characteristics of circular saws and for accurately aligning a circular saw and the associated notching tool in a cutting machine for cutting a pack (3) of panels (2), the method comprising:
the step of determining the distances of at least one side of a number of teeth (42b) of a first saw (42) from a first reference surface (42a and/or 42c); and
the step of determining the distances of at least one side of a number of teeth (51b) of a notching tool (51), for notching the bottom panel (2) in said pack (3), from a second reference surface (51a and/or 51c); and being **characterized by** comprising:
the step of manually aligning said notching tool (51), having given geometric characteristics, with said first saw (42), so as to establish a zero position of said notching tool (51) with respect to said first saw (42);
the step of loading in said machine an electronic file containing the geometric parameters of a set of saws (42) related to said notching tool (51);
the step of replacing said first saw (42) with a second saw (42) of said set of saws (42), similar to the first saw (42), without changing said notching tool (51); and
the step of moving said notching tool (51) horizontally with respect to the previously determined said zero position and according to the instructions in said electronic file, so that the groove (85) formed in the underside surface of said bottom panel (2) is centered perfectly by a cut (84) made by said second saw (42).

2. A method as claimed in Claim 1, **characterized by** comprising:
the step of determining the thickness (S) of said number of teeth (42b) of said first saw (42);
the step of calculating the width of the cut (84) made in said pack (3) with said parameters;
the step of determining the thickness (S) of said number of teeth (51b) of said notching tool (51); and
the step of calculating the width of the groove (85) made in said bottom panel (2) with said parameters.

3. A method as claimed in Claim 1, **characterized by** comprising:
the step of determining the distances of at least one side of a number of teeth (42b) of said second saw (42) from said first reference surface (42a and/or 42c);
the step of determining the thickness (S) of said number of teeth (42b) of said second saw (42); and
the step of calculating the width of the cut (84) made in said pack (3) with said parameters.

4. A method as claimed in Claim 2, **characterized by** comprising the step of determining the distance between said first reference surface (42a, 42c) and said second reference surface (51a, 51c).

5. A method as claimed in Claim 2, **characterized by** comprising the step of determining the distance between the top of said tooth (51b) of said notching tool (51) and the axis of rotation of said notching tool (51).

6. A method as claimed in Claim 1, **characterized by** comprising the step of moving said notching tool (51) vertically as a function of the previously determined parameters.

## Patentansprüche

1. Verfahren zum Messen der Eigenschaften von Kreissägeblättern und zum genauen Ausrichten eines Kreissägeblatts und des zugehörigen Vorritzwerkzeugs in einer Schneidmaschine zum Schneiden eines Stapels (3) von Paneelen (2), wobei das Verfahren
den Schritt des Bestimmens des Abstands von zumindest einer Seite einer Anzahl von Zähnen (42b) eines ersten Sägeblatts (42) von einer ersten Bezugsfläche (42a und/oder 42c) und
den Schritt des Bestimmens des Abstands von zumindest einer Seite einer Anzahl von Zähnen (51b) eines Vorritzwerkzeugs (51) zum Vorritzen des untersten Paneels (2) in dem Stapel (3) von einer zweiten Bezugsfläche (51a und/oder 51c),
aufweist,
**dadurch gekennzeichnet,**
**dass** es
den Schritt des manuellen Ausrichtens des Vorritzwerkzeugs (51), das vorgegebene geometrische Eigenschaften hat, mit dem ersten Sägeblatt (42), so dass eine Nullstellung des Vorritzwerkzeugs (51) mit Bezug auf das erste Sägeblatt (42) eingerichtet wird,
den Schritt des Ladens einer elektronischen Datei in die Maschine, die die Geometrieparameter eines Satzes von dem Vorritzwerkzeug (51) zugehörigen Sägeblättern (42) enthält,
den Schritt des Ersetzens des ersten Sägeblatts (42) durch ein zweites Sägeblatt (42) des Satzes an Sägeblättern (42), das ähnlich zu dem ersten Sägeblatt (42) ist, ohne Wechseln des Vorritzwerkzeugs (51), und
dem Schritt des horizontalen Bewegens des Vorritzwerkzeugs (51) in Bezug auf die zuvor bestimmte Nullposition und entsprechend den Anweisungen in der elektronischen Datei, so dass die in der Unterseite des untersten Paneel (2) gebildete Rille (85) perfekt auf einen Schnitt (84) zentriert ist, der von dem zweiten Sägeblatt (42) erzeugt wird,
aufweist.

2. Verfahren nach Anspruch 1,
**dadurch gekennzeichnet,**
**dass** es
den Schritt des Bestimmens der Dicke (S) der Anzahl von Zähnen (42b) des ersten Sägeblatts (42),
den Schritt des Berechnens der Schnittbreite (84), die in dem Stapel (3) mit den Parametern geschnitten wird,
den Schritt des Bestimmens der Dicke (S) der Anzahl von Zähnen (51b) des Vorritzwerkzeugs (51) und
den Schritt des Berechnens der Breite der Rille (85), die in dem untersten Paneel (2) mit den Parametern geritzt wird,
aufweist.

3. Verfahren nach Anspruch 1,
**dadurch gekennzeichnet,**
**dass** es
den Schritt des Bestimmens des Abstands von zumindest einer Seite einer Anzahl von Zähnen (42b) des zweiten Sägeblatts (42) von der ersten Bezugsfläche (42a und/oder 42c),
den Schritt des Bestimmens der Dicke (S) der Anzahl von Zähnen (42b) des zweiten Sägeblatts (42) und
den Schritt des Berechnens der Schnittbreite (84), die in dem Stapel (3) mit den Parametern geschnitten wird,
aufweist.

4. Verfahren nach Anspruch 2,
**dadurch gekennzeichnet,**
**dass** es den Schritt des Bestimmens des Abstands zwischen der ersten Bezugsfläche (42, 42c) und der zweiten Bezugsfläche (51a, 51c) aufweist.

5. Verfahren nach Anspruch 2,
**dadurch gekennzeichnet,**
**dass** es den Schritt des Bestimmens des Abstands zwischen der Spitze des Zahns (51b) des Vorritzwerkzeugs (51) und der Drehachse des Vorritzwerkzeugs (51) aufweist.

6. Verfahren nach Anspruch 1,
**dadurch gekennzeichnet,**
**dass** es den Schritt des vertikalen Verfahrens des Vorritzwerkzeugs (51) als Funktion der zuvor bestimmten Parameter aufweist.

## Revendications

1. Procédé pour mesurer les caractéristiques de scies circulaires et pour aligner précisément une scie circulaire et l'outil d'encochage associé dans une machine à découper servant à couper un lot (3) de panneaux (2), le procédé comprenant:
une étape de détermination des distances d'au moins un côté d'un certain nombre de dents (42b) d'une première scie (42) par rapport à une première surface de référence (42a et/ou 42c); et
une étape de détermination des distances d'au moins un côté d'un certain nombre de dents (51b) d'un outil d'encochage (51), servant à encocher le panneau inférieur (2) dudit lot (3), par rapport à une deuxième surface de référence (51 a et/ou 51c); et étant **caractérisé en ce qu'**il comprend:
une étape d'alignement manuel dudit outil d'encochage (51), ayant des caractéristiques géométriques données, avec ladite première scie (42), de manière à établir une position zéro dudit outil d'encochage (51) par rapport à ladite première scie (42);
une étape de chargement dans ladite machine d'un fichier électronique contenant les paramètres géométriques d'un ensemble de scies (42) ayant rapport audit outil d'encochage (51);
une étape de remplacement de ladite première scie (42) par une deuxième scie (42) dudit ensemble de scies (42), similaire à la première scie (42), sans changer ledit outil d'encochage (51); et
une étape de déplacement dudit outil d'encochage (51) horizontalement par rapport à ladite position zéro précédemment déterminée et conformément aux instructions dudit fichier électronique, de telle manière que la rainure (85) formée dans la surface inférieure dudit panneau inférieur (2) est centrée parfaitement sur une coupe (84) faite par ladite deuxième lame (42).

2. Procédé selon la revendication 1, **caractérisé en ce qu'**il comprend:
une étape de détermination de l'épaisseur (S) dudit nombre de dents (42b) de ladite première scie (42);
une étape de calcul de la largeur de la coupe (84) faite dans ledit lot (3) avec lesdits paramètres;
une étape de détermination de l'épaisseur (S) dudit nombre de dents (51b) dudit outil d'encochage (51); et
une étape de calcul de la largeur de la rainure (85) faite dans ledit panneau inférieur (2) avec lesdits paramètres.

3. Procédé selon la revendication 1, **caractérisé en ce qu'**il comprend:
une étape de détermination des distances d'au moins un côté d'un certain nombre de dents (42b) de ladite deuxième scie (42) par rapport à ladite première surface de référence (42a et/ou 42c);
une étape de détermination de l'épaisseur (S) dudit nombre de dents (42b) de ladite deuxième scie (42); et
une étape de calcul de la largeur de la coupe (84) faite dans ledit lot (3) avec lesdits paramètres.

4. Procédé selon la revendication 2, **caractérisé en ce qu'**il comprend une étape de détermination de la distance entre ladite première surface de référence (42a, 42c) et ladite deuxième surface de référence (51 a, 51c).

5. Procédé selon la revendication 2, **caractérisé en ce qu'**il comprend une étape de détermination de la distance entre le sommet de ladite dent (51b) dudit outil d'encochage (51) et l'axe de rotation dudit outil d'encochage (51).

6. Procédé selon la revendication 1, **caractérisé en ce qu'**il comprend une étape de déplacement dudit outil d'encochage (51) verticalement en fonction des paramètres précédemment déterminés.
